# EUROPEAN PATENT APPLICATION

(11) **EP 3 082 038 A1**
(43) Date of publication of application: **19.10.2016**
(21) Application number: 15163717.0
(22) Date of filing: 15.04.2015
(51) Int. Cl.: G06F 9/45

(54) **METHOD, DEVICE AND SYSTEM FOR CREATING A MASSIVELY PARALLELIZED EXECUTABLE OBJECT**

(71) Applicant: Hybridserver Tec AG, 22848 Norderstedt (DE)
(72) Inventor: Dürkop, Hendrik, 22335 Hamburg (DE); Zielinski, Tobias, 22391 Hamburg (DE); Aslan, Halis, 20535 Hamburg (DE); Saremi, Farbod, 22391 Hamburg (DE)
(74) Representative: Seemann & Partner Patentanwälte mbB

(57) **Abstract**

The present invention provides a method for optimizing machine code to be executed on a device that comprises one or more busses and a plurality of processing elements, wherein the machine code is configured to execute a task on the device comprising a plurality of subtasks, wherein the method comprising the steps:
- identifying for at least one subtask one or more processing elements from the plurality of processing elements that are capable of processing the subtask,
- identifying one or more paths for communicating with the one or more identified processing elements,
- predicting a cycle length for one or more of the identified processing elements and/or the identified paths,
- selecting a preferred processing element from the identified processing elements and/or selecting a preferred path from the identified paths, and
- generating the machine code sequence that comprises instructions that cause the device to communicate with the preferred processing element over the preferred path and/or to execute the subtask on the preferred processing element.

The present invention also relates to a device and a system.

## Description

### Field of the Invention

The present invention relates to a method for a method for optimizing machine code to be executed on a device that comprises one or more busses and a plurality of processing elements. Further, the present invention relates to a device and a system that are configured to decide on a distribution path.

### Background of the Invention

Nowadays, large data amounts become available through the rapidly developing communication and computing techniques. Whereas highly specialized processing elements have been developed that are adapted to efficiently execute different kinds of processing tasks, many resources are wasted because the tasks are inefficiently transported from a control element to a suitable processing element.

Some of the known hardware/software solutions might provide improvements into one direction or another. However, they still do not improve any or at least most of the above-listed criteria. Therefore, there is still a need for an improved hardware or software solution for optimizing the processing of tasks on a number of processing elements.

### Summary of the Invention

It is therefore an object of the present invention to provide a method, a device and a system that overcome at least some of the above-mentioned problems of the prior art.

Particularly, the advantages of the present invention are achieved by the appended independent claims. Further aspects, embodiments and features of the present invention are specified in the appended dependent claims and in the description and also make a contribution to the achievement of said advantages.

According to an embodiment, the present invention refers to a method for optimizing machine code. The machine code can be executed on a device that can comprise one or more busses and/or a plurality of processing elements. The machine code is configured to execute a task on the device. The task comprises a plurality of subtasks. The method comprises the steps:
- identifying for at least one of the subtasks one or more processing elements from the plurality of processing elements that are capable of processing the subtask,
- identifying one or more paths for communicating with the one or more identified processing elements,
- predicting a cycle length for one or more of the identified processing elements and/or the identified paths,
- selecting a preferred processing element from the identified processing elements and/or selecting a preferred path from the identified paths;
- generating the machine code sequence that comprises instructions that cause the device to communicate with the preferred processing element over the preferred path and/or to execute the subtask on the preferred processing element.

The present invention is based on the idea that based on a cycle length prediction that particular path and processing element that lead to the fastest processing of the subtask are chosen. The method of the present invention thus avoids wasting of resources that is caused by using unnecessary long paths for communicating with a processing element or by using a processing element that is not ideally suited for processing a given subtask.

The present invention can be implemented in particular in systems where at least two processing elements are capable of processing the subtask. In particular, the invention is advantageous if the processing times of the at least two processing elements for processing the subtasks are different.

Moreover the present invention can be implemented in particular with bus systems where for at least one processing element at least two paths for communicating with this processing element are available. In particular, the invention is advantageous if the transfer times for the at least two paths are different.

The method of the present invention thus avoids wasting of resources that is caused by using unnecessary long paths for communicating with a processing element or by using a processing element that is not ideally suited for processing a given subtask.

The present invention is based on the further idea that the cycle-length prediction and selection of the preferred processing element and/or path is carried out before and/or during generating the machine code, i.e. before and/or during compiling.

Consequently the method can be carried out by a compiler, preferably a GNU C Compiler (GCC). Such a compiler usually constitutes a computer program or set of programs that transforms a source code written in a programming language, i.e. high-level programming language, into another computer language which is usually a lower level language, e.g. an assembly language or a machine code.

Preferably the compiler optimizes the machine code as defined in claim 1. The resulting software, which will run on the device during run time, is preferably a product of the compiler and/or the method as defined in claim 1. The compiler is preferably adapted to do the optimization according to the invention in view of the existence of a plurality of processing elements (in particular heterogeneous processor cores) which can process a task in parallel.

Moreover, the present invention has the advantage that the method is carried out before and/or during generating the machine code (i.e. before and / or during compiling). Hence, the method is carried out before or at least partially before the execution of the machine code (i.e. before or at least partially before runtime).

According to a further aspect of the invention the method can be configured such that it is determined whether the machine code to be executed comprises any tasks or subtasks which could be executed in parallel. After such an analysis the machine code can be optimized by parallelisation of the identified tasks or subtasks. This parallelisation can be done by the steps of the method according to the invention as defined in claim 1.

According to a further aspect of the invention, the step of identifying one or more processing elements (i.e. identifying for at least one of the subtasks one or more processing elements from the plurality of processing elements that are capable of processing the sub task) includes the following further sub steps:
- dividing the task into sub tasks,
- identifying logically dependencies of the subtask, and
- identifying one or more processing elements from the plurality of processing elements that are capable of processing the subtasks based on the dependencies.

Advantageously, in case no logical dependencies of the subtasks are determined, these subtasks can be processed in parallel. In case any dependencies are determined, it is determined whether these dependencies can be eliminated (e.g. by converting dependent or subtasks into independent subtasks). Then for each of these subtasks one or more processing elements can be identified that are capable of processing the subtasks. In this way each of these subtasks can be processed in parallel by another processing element.

Hence, it is possible that even such subtasks which are not independent but which have conditional relationships to each other can be converted into parallel subtasks constituting single parallel cases to each other.

As an example of converting dependent subtasks into independent subtasks, any "if - then - else" branches in the task can be identified and converted into case-select algorithms. Hence, these cases can constitute single subtasks which are now independent from each other. Consequently they can be processed in parallel. In addition, when processing these subtasks, as soon as there is a positive case-hit in one of these subtasks, all these subtasks can be terminated immediately.

For independent subtasks one or more processing elements can be identified, which are capable of processing the subtasks in parallel. However, there are also semi-independent subtasks, which comprise each at least two steps which can be processed independently from each other. For such semi-independent subtasks it is possible that some of their steps can be processed in parallel, e.g. an iteration, which follows a still unknown intermediate result of another step, can already be carried out.

Moreover, it is possible that subtasks are sorted based on criteria selected by the programmer (e.g. the priority and/or the importance of a subtask). Afterwards for each of these subtasks a processing element can be identified, wherein this identification can also be based on the current load of the processing elements, the performance of each of the processing elements and/or the costs of transport (i.e. the transfer time of the path for communicating with the respective processing element) for each of the processing elements.

According to another aspect of the invention, the cycle length for an identified processing element and/or an identified path, in particular for each path, is predicted based on different criteria. These criteria can include a branch prediction method, in particular based on former predictions and/or selections of preferred paths. Moreover, the criteria can also include a brute force method, wherein the cycle length for each identified path is evaluated. With such a brute force method the most or all theoretical possible cases (i.e. all possible paths to all possible processing elements) can be evaluated by using random data for evaluating the optimal (i.e. most performant) execution of the machine code. This might be particular suitable when a big amount of data has to be processed, what requires many cycles on many different processing elements.

According to a further aspect of the invention the step of selecting the preferred processing element and/or selecting the preferred path is based on one or more criteria. These criteria may include the priority of the subtask, wherein a small subtask can have a higher priority. For a subtask with a higher priority a processing element and/or path with a short cycle length can be selected. Accordingly, subtasks with a high priority can be processed by those processing elements which have a higher performance and/or which require a lower cost of transport. However, subtasks with a lower priority can be addressed to processing elements which are less performant and/or which have a higher cost of transport.

Moreover, selecting the preferred processing element and/or selecting the preferred path can be based on the dependency of the subtask, wherein processing elements and/or paths can be selected such that independent subtasks can be carried out in parallel on several processing elements. Hence, it can be achieved that for each subtask, which can be processed in parallel, an individual processing element is identified. Hence, these subtasks can be processed in parallel.

It is a principal concept of the invention that for at least one of the subtasks the steps as defined in claim 1 are performed. Hence, for this at least one subtask the steps as defined in claim 1 can be carried out before or at least during the generation of the machine code (e.g. compiling). However, according to a preferred embodiment for at least one other subtask comprised by the task the following steps are carried out after the step of generating the machine code. Preferably these steps are carried out when executing the machine code (i.e. during runtime):
- identifying for this subtask one or more processing elements from the plurality of processing elements that are capable of processing the subtask,
- identifying one or more paths for communicating with the one or more identified processing elements,
- predicting a cycle length for one or more of the identified processing elements and/or the identified paths,
- selecting a preferred processing element from the identified processing elements and/or selecting a preferred path from the identified paths.

Consequently, also for further subtasks a parallelization is possible, even if it is only done during the execution of the machine code (i.e. during runtime). Preferably the parallelization is already done for all of the subtasks during compiling. However, in case this is not possible, the remaining not yet parallelized subtasks a preferably parallelized after generating the machine code and/or during executing the machine code and/or the task.

According to an embodiment of the present invention, the cycle length for an identified processing element and/or an identified path is predicted based on
- a predicted forward transfer time for transferring an instruction and input data to the processing element on the identified path,
- a predicted return transfer time for transferring output data from the processing element on the identified path, and/or
- a predicted processing time for processing a subtask on the identified processing element.

Accordingly, the cycle length for an identified processing element can be predicted based on a predicted processing time for processing a subtask on the identified processing element. The cycle length for an identified path can be predicted based on a predicted forward transfer time for transferring an instruction and input data to the processing element on the identified path and a predicted return transfer time for transferring output data from the processing element on the identified path.

The predicted forward transfer time and the predicted return transfer time may comprise the time for the entire input data to arrive at the processing element.

According to an embodiment of the present invention, the predicted cycle length is the sum of the predicted forward transfer time, the predicted return transfer time and the predicted processing time.

This embodiment has the advantage that the predicted cycle length is particularly quick and efficient to compute. In some embodiments, the sum of the predicted forward transfer time, the predicted return transfer time and the predicted processing time may be a weighted sum. This can be particularly useful if only some of the predicted times can be exactly calculated. In this case a higher weighting may be given to the time which is exactly calculated.

According to a further aspect of the invention, predicting the cycle length can be based on the current availability and/or utilization of the one or more busses. Moreover, predicting the cycle length can also be based on the current availability and/or utilization of the one or more identified processing elements.

Considering the current availability and/or utilization of the busses and the processing elements allows for an even more precise prediction of path time and processing time.

According to an embodiment of the present invention, the method further comprises:
- beginning processing of a subtask on the selected processing element,
- updating the predicted cycle length of the subtask to obtain a predicted remaining cycle length of the subtask,
- cancelling the processing of the subtask on the selected processing element if it is determined that the predicted remaining cycle length is higher than a predicted cycle length for processing the subtask in a different processing element, and
- assigning the subtask to said different processing element.

Updating the predicted cycle length of the subtask to obtain a predicted remaining cycle length of the subtask has the advantage that further information, that become available only after the processing of the subtask has started, can be considered. For example in cases where information becomes available that a processing element that has already started processing a certain subtask is slowed down and expectedly, it may be decided to cancel processing of the subtask on this processing element and defer the subtask to a different processing element.

This embodiment of the invention has the further advantage that the processing of the subtask on a given processing element can be cancelled if the processing takes much longer than predicted, which may be an indication that the processing on this processing element has been falsely predicted.

In other embodiments of the invention, the processing of a subtask on a selected processing element can be cancelled if the control element determines that this processing element is needed in order to process a subtask with higher priority. This can be particularly relevant in a case of predicted likely future subtasks.

In a further preferred embodiment of the invention, the information that the processing of subtasks on a given processing element has taken a longer time than predicted is stored in a table and considered when predicting processing elements for similar subtasks. In particular, if the processing of a certain subtask has failed on a given processing element, this information can be stored in a table. In extreme cases, were the processing of a certain kind of the subtask has repeatedly failed on a given processing element it may be decided that similar subtasks should not be processed on this processing element, even if the processing element indicates that it is available.

According to an embodiment of the present invention, the method further comprises:
- determining a threshold time for the processing of a subtask,
- beginning processing of the subtask on the selected processing element,
- checking whether the actual processing time for the subtask is higher than the threshold time,
- cancelling the processing of the subtask if the actual processing time is higher than the threshold time,
- assigning the subtask to a different processing element.

This embodiment provides a simple way of deciding when execution of a certain subtask should be cancelled because it is taking significantly longer than expected, which is likely due to a processing failure.

According to a further embodiment of the invention, there is provided a device, comprising
- preferably one or more busses,
- one or more control elements, and
- a plurality of processing elements,
At least one of the control elements is adapted to generate a machine code configured to execute a task on the processing elements, preferably in parallel.

Furthermore, the device comprises one or more first processing elements. These first processing elements are preferably located on the same die as the control element. This means that they can be respective processor cores of a first multicore processor (e.g. a cell processor). The first processing elements and the control element can be connected by a bus, e.g. by a ring bus.

Moreover the device comprises one or more second processing elements. The second processing elements are preferably located on a second die. This means they can be processor cores of a second multicore processor (e.g. a second cell processor). However, the one or more second processing elements (or the second multicore processor) can be located on the same board, e.g. a printed circuit board (PCB), as the first processing elements.

The first and second multicore processors communicate directly with each other. The one or more second processing elements can be connected to the control element by (direct) wiring (e.g. copper wires). Preferably the wiring is located on the board on which first and second processing elements are placed. Hence, the control element, and the first and second multicore processors can communicate via this wiring. Thus the one or more second processing elements can be connected to the control element by a point to point cable or a board to board connection, which can constitute a bus or part of a bus.

Furthermore the device comprises one or more third processing elements. The one or more third processing elements can be located on at least one further (second) board.

In addition the device can comprise one or more fourth processing elements. The one or more fourth processing elements can be connected to the control element via a network. Also the network can constitute a bus or part of a bus.

Preferably, the second and/or the third processing elements are connected to the control element via a Field Programmable Gate Array (FPGA). Hence, the fist and the second multicore processors can be connected by a FPGA. Moreover the third processing elements on the further (second) board can be connected to the control element, in particular to the first board, via the same FPGA. The Field Programmable Gate Array (FPGA) can be configured to realize a communication between the at least one third multicore processor and the first multicore processor.

According to a further aspect of the invention, the task comprises a plurality of subtasks. Moreover, generating the machine code is preferably based on:
- identifying for at least one subtask one or more processing elements from the plurality of processing elements that are capable of processing the subtask,
- identifying one or more paths for communicating with the one or more identified processing elements,
- predicting a cycle length for one or more of the identified processing elements and/or the identified paths,
- selecting a preferred processing element from the identified processing elements and/or selecting a preferred path from the identified paths;
- generating the machine code sequence that comprises instructions that cause the device to communicate with the preferred processing element over the preferred path and/or to execute the subtask on the preferred processing element.

According to an embodiment of the present invention, at least one of the control elements is adapted to predict the cycle length based on
- a predicted forward transfer time for transferring an instruction and input data to the processing element,
- a predicted return transfer time for transferring output data from the processing element, and/or
- a predicted processing time for processing the subtask in a processing element.

According to an embodiment of the present invention, at least one of the control elements is adapted to carry out the steps:
- beginning execution of the subtask on the selected processing element,
- updating the predicted cycle length of the subtask to obtain a predicted remaining cycle length of the subtask,
- cancelling the processing of the subtask on the selected processing element if it is determined that the predicted remaining cycle length is higher than a predicted cycle length for processing the subtask in a different processing element, and
- re-assigning the subtask to said different processing element.

According to an embodiment of the present invention, the device further comprises a busy table comprising information about the current availability and/or utilization of the plurality of processing elements, wherein the control element is adapted to regularly update the information in the busy table.

According to an embodiment of the present invention, the one or more busses comprise one or more rings. Preferably the first processing elements and the control element are connected by a bus, e.g. a ring bus. Preferably also the second processing elements are connected by a further bus, e.g. a ring bus. Preferably also the third processing elements are connected by a further bus, e.g. a ring bus. Preferably also the fourth processing elements are connected by a further bus, e.g. a ring bus. At least the busses of the first and the second processing elements, but also in combination with the busses of the third and/or the fourth processing elements, can form a bus system.

According to a further embodiment of the present invention, the one or more busses can comprise a first set of busses for transporting instructions and a second set of busses for transporting data. This has the advantage that the first of the busses can be optimized for low-latency transmission of instructions and the second set of the busses can be optimized for high bandwidth transmission of potentially large amounts of data. In particular, the first and second set of busses can operate at different frequencies, e.g. the first set of busses can operate at a higher frequency whereas the second set of busses operates at a lower frequency, but provides a higher transmission capacity per cycle.

According to further embodiment of the present invention, the one or more busses comprise two rings that are unidirectional and oriented in opposite directions.

In this way, the present invention can be executed in a particularly efficient manner because a lot of data transport time can be saved if the more suitable of the two differently oriented ring busses is chosen.

According to an embodiment of the present invention, the one or more busses comprise an Element Interconnect Bus.

According to a further embodiment of the present invention, at least one of the plurality of processing elements is connected to the one or more busses and additionally comprises a direct connection to the primary processing element.

According to an embodiment of the present invention, the device further comprises a prediction module that is configured to predict future subtasks based on previously processed subtasks.

Predicting future subtasks has the advantage that data required for a future subtask can be preloaded already before the subtask is actually executed. For example, if it is detected that previous subtasks involved loading data1.jpg, data2.jpg, and data3.jpg, the prediction module could predict that a future subtask likely will involve loading a possibly existent data4.jpg and thus preload data4.jpg already before the corresponding subtask is started. In a preferred embodiment, such preloading of data is performed only if the system is under low load, for example if the current load of the control element is lower than a predetermined threshold value.

According to a further embodiment of the present invention, the device is adapted to cancel one or more predicted future subtasks in favour of executing current subtasks if one or more new subtasks arrive after beginning execution of one or more predicted future subtasks. For example, it may turn out that the prediction was not accurate and the new subtasks should be executed instead of the predicted future subtasks.

According to a further embodiment of the present invention, there is provided a server system, comprising a device according to one of the above-described embodiments.

In this way, also a server system is preferably configured such that it provides all of the positive effects listed in the present application. Additionally, introduction and/or use of existing data center infrastructures/components/modules/elements is enabled at the same time.

According to an embodiment of the present invention, the device can comprise a set of two multicore processors directly communicating with each other and adapted to carry out the method as outlined above and explained in more detail below. However, the device can also comprise three such sets connected by (and preferably communicating via) a FPGA and adapted to carry out together the method according to the invention.

According to a further aspect of the present invention, the one or more busses, the one or more control elements, and at least some of the plurality of processing elements are located inside the same chip housing. This has the advantage that a particularly high bandwidth can be achieved for communicating with the components that are located within the same housing. Furthermore, this set-up yields cost savings in mass production.

Some elements of the bus can act both as control elements and as processing elements. For example, a first control element can send a subtask to a second control element, which then acts as processing element.

According to an embodiment of the present invention, access to the one or more busses is managed using a time division multiple access (TDMA) scheme. In a simple TDMA scheme, the active element of the bus is changed in fixed time increments. In this way, it is determined in advance, when which element will be allowed to access the bus. In the context of the present invention, this has the advantage that precise predictions about future availability of the one or more busses can be made.

According to a further embodiment of the present invention, access to the one or more busses is managed using a token passing scheme. In particular, an access token can be passed from a first element of the bus to the next element, when the first element is finished accessing the bus. Token passing schemes can be more efficient than simple TDMA schemes because idle time slots are avoided. On the other hand, the prediction of future bus availability can be more complicated. To this end, the control element can keep a table of current and future subtasks to be executed on the bus. This allows an accurate prediction of future bus availability and choosing processing elements and transfer paths such that the one or more busses are used most efficiently.

According to a further embodiment of the present invention, the one or more busses are set up as token rings, i.e. the neighbours of an element are the physical neighbours of this element.

The present invention can also be used with other protocols for controlling access to the one or more busses. These can include static and dynamic access control schemes, e.g. scheduling methods and random access methods.

The present invention can be used with different kinds of topologies, in particular linear busses, ring busses, and branch topologies, star networks and tree topologies. In some embodiments, the method of the present invention can even be used in conjunction with fully connected meshes.

A task can comprise one or more instructions and data. A subtask can comprise one instruction or eventually also a group of instructions comprised by the task.

Identifying one or more processing elements that are capable of processing the subtask can be performed for example by using a lookup table which for each processing element provides the information, which processing capabilities it has. For example, for a given processing element that comprises a graphical processing unit (GPU) the table could comprise the information that this processing element can process certain subtasks relating to certain graphical processing instructions.

Identifying one or more paths for communicating with the one or more identified processing elements can be implemented by looking up in a table through which busses a given processing element is connected with the control element that is requesting processing of this subtask. Even if there is only one bus available to communicate with the given processing element, there might be two directions available through which the control element can communicate with this processing element. In this case, there might be e.g. two paths available for communicating with the processing element in clockwise or counter-clockwise direction on a ring bus. Furthermore, a bus might comprise branches, which also result in a plurality of paths that are available for a communication with a given processing element.

Predicting a cycle length for one or more of the identified processing elements and the identified paths may comprise using two lookup tables: a first lookup table which stores path lengths for different paths between control elements and processing elements and a second lookup table which stores information about the expected processing time for different subtasks and different processing elements. For example, the second lookup table could comprise the information that a certain graphical processing instruction requires 10 clock cycles to process on a first processing element, but only eight clock cycles to process on a second processing element.

In other embodiments of the invention, there is only one lookup table, which comprises information about the expected processing times for different kinds of subtasks on different processing elements. For example, such a table can comprise expected processing times for a certain instruction on a certain processing element, with further information about how the processing time varies depending on the amount of input data for this instruction.

In other words, the cycle length can be predicted based on one or more of the following information: knowledge, how the bus is structured; in which state or position the bus and or the processing elements are at the moment; information about which subtasks with which amount of data need to be processed; information, whether a given subtask comprises more datasets than can be stored in one vector, such that the subtask should ideally be distributed across the available processing elements, i.e. SIMD across individual processing elements and processing steps.

In some cases the predictions may be based on exact calculations. In other cases, the predictions may be based on heuristics and only be a rough estimation of the true path time or processing time.

According to a further embodiment of the present invention, there is provided a computer readable medium comprising a program code, which, when executed by a computing device, causes the computing device to carry out the method as outlined above and explained in more detail below.

### Brief Description of the Drawings

Further advantages and preferred embodiments are included in the dependent claims and will be better understood from the description below of a preferred embodiment, with reference to the accompanying drawings. In the following drawings:
Fig. 1 shows a schematic device according the invention.
Fig. 2 shows a schematic representation of a bus system with ring structure;
Fig. 3a shows a schematic representation of a bus system with two ring busses according to the invention;
Fig. 3b shows a further schematic representation of a bus system according to the invention;
Fig. 4 shows a schematic representation of a further bus system, with indicated pointers to current and future active elements;
Fig. 5 shows a schematic representation of a further bus system;
Fig. 6 shows a schematic representation of a bus system with TDMA structure that operates bi-directional;
Fig. 7 shows a schematic representation of a bus system with TDMA structure with branches and that operates bi-directional;
Fig. 7a shows a schematic representation of the bus system of Fig. 7, with a global token in a primary branch;
Fig. 7b shows a schematic representation of the bus system of Fig. 7, with a global token in a secondary branch and optionally a local token in a different secondary branch;
Fig. 8 shows a schematic representation of a bus system with TDMA structure that operates bi-directional in which not all but some elements share the same busses; and
Fig. 9 shows a schematic representation of a further bus system with ring structure;

### Detailed Description of the Invention

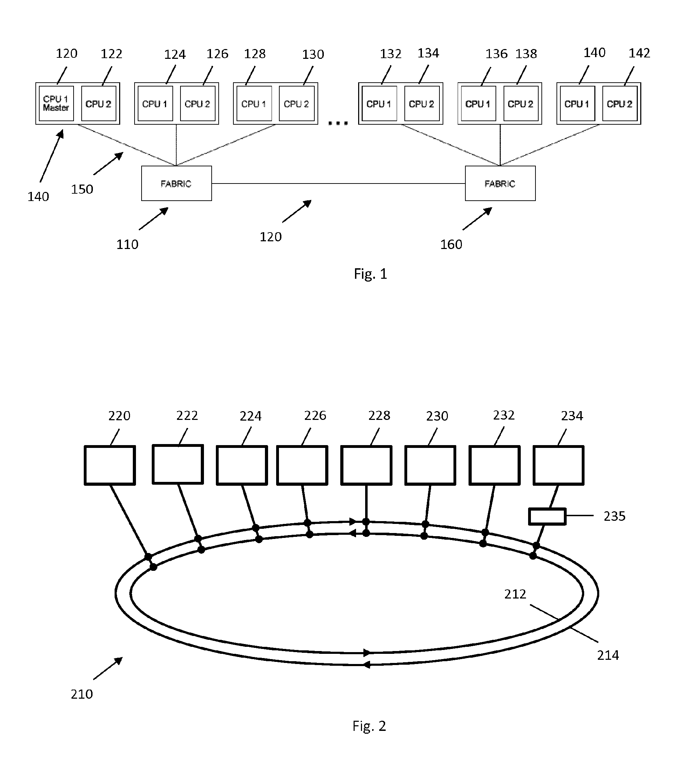

Fig. 1 shows a schematic representation of a device according to the invention which comprises a bus system. The bus system comprises a plurality of multicore processors 120, 122, 124, 126, 128, 130, 132, 134, 136, 138, 140, 142. At least one of these processors, e.g. the processor 120 which is indicated as "CPU 1 Master" comprises a control element (not shown). This control element is adapted to generate a machine code which is configured to be executed on a plurality of further processing elements. The control element is one processor core of a multicore processor 120. Consequently, the further processor cores (not shown), e.g. 8 further cores, constitute processing elements according to the invention. The cores of the multicore processor 120 are connected by a ring bus.

The multicore processor 120 is located on the same PCB board 140 as the further multicore processor 122. The multicore processors 120 and 122 are directly communicating with each other. In order to do so, they are connected by copper wires located on the same PCB 140 board like the processors 120 and 122.

The processors 120 and 122 are connected each to a Fabric 110. The Fabric 110 comprises a FPGA located on a PCB which is preferably separate to the PCB 140. The connections between the FPGA and the processors 120, 122 are XIO links. Such a XIO link can be a packet-based, high-performance computer bus. Preferably, a specific protocol is running on the XIO link, which is configured to support the method according to the invention (e.g. which supports the parallelization according to the invention). The XIO links comprise serialized General-purpose inputs/outputs (GPIOs). The FPGA is configured to deserialize these GPIOs. Accordingly the FPGA has a Serializer/Deserializer (SerDes) function. The Serializer/Deserializer (SerDes) function can comprise a pair of functional blocks used for high speed communications to compensate for limited input/output. These blocks can convert data between serial data and parallel interfaces in each direction. The SerDes advantageously provides data transmission over a single/differential line, in order to minimize the number of I/O pins and interconnects.

The connection 150 between the processors 120, 122 and the Fabric 110 comprises one or more copper cables. Moreover, there is usually arranged an additional PCB connector element (not shown) in the connection 150, i.e. between the PCB, on which the processors are located, and the Fabric 110. The PCB connector element has the function to combine the connections (i.e. the cables) of the processors 120 and 122.

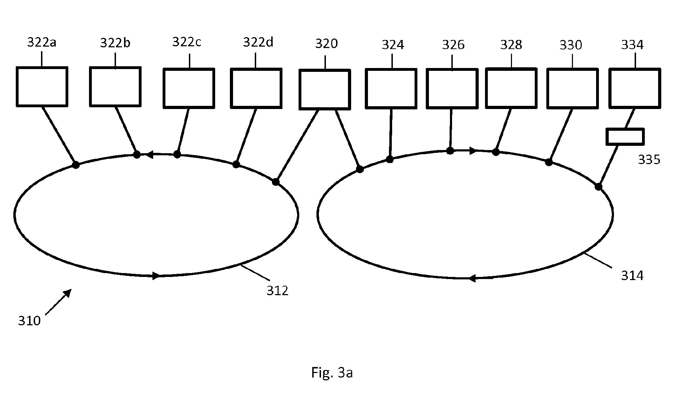

The processors 120 and 122 form a massively parallel processor array (MPPA). The method according to the invention is applied on this MPPA. Hence, the MPPA constitutes a device (i.e. a bus system) according to the invention. The bus system comprising the two processors 120 and 122 can correspond to that one shown in Fig. 3a.

Said MPPA is furthermore connected via the Fabric 110 to further two or more MPPAs comprising the multicore processors 124, 126, 128 and 130. Each of the processors 124, 126, 128 and 130 is connected to the FPGA by a XIO link, as described above in context of processors 120, 122.

Each of the MPPAs can carry out the method according to the invention, e.g. independently from each other. However, it is also possible that the method according to the invention is carried out on the combination of the three MPPAs in a unified manner. Hence, the combination of the MPPAs can also constitute a device (i.e. a bus system) according to the invention. In this case the multicore processor 120 can be the master CPU, i.e. it comprises one core which is the control element according to the invention.

The processors 120 to 130 can be Cell processors. Of course, it is also possible, that such a combination of MPPAs comprises different processors. Hence, the different performance of the different processors and the respectively different processor cores (i.e. processing elements) and/or the different costs of transport due to different connections between the processors can be considered when optimizing the machine code according to the invention.

Furthermore the combination of MPPAs is connected via a network 120, e.g. a 40 Gbit optical fiber, to further Fabrics, as e.g. Fabric 160. These Fabrics are again connected to further MPPAs, which correspond to those explained above. However, also different MPPAs or computing entities could be connected via the network 120. It is possible that the method according to the invention is carried on the network lever, i.e. on the combination of all MPPAs connected to the network in a unified manner. The complete entity of elements shown in Fig. 1 preferably forms a blade system.

Fig. 2 shows a schematic representation of a bus system 210 with a ring topology. The multicore processors 120, 122, 124, 126, 128, 130, 132, 134, 136, 138, 140, 142 of Fig. 1 can comprise each such a bus system. The bus system 210 comprises a first ring bus 212 which is adapted to transport instructions and data in a counter-clockwise direction and a second bus 214 which is adapted to transport instructions and data in a clockwise direction. Attached to the busses 212 and 214 is a processing core 220, which acts as a control element. Furthermore, there is a plurality of elements of various functionality 222-234 connected to the busses 212, 214. The elements 222-234 comprise a random access memory (RAM) 222, a flash memory 224, a mass storage controller 226, a network interface controller 228, an I2C bus 230, a Peripheral Component Interconnect Express bus (PCIe) 232 and further miscellaneous devices 234.

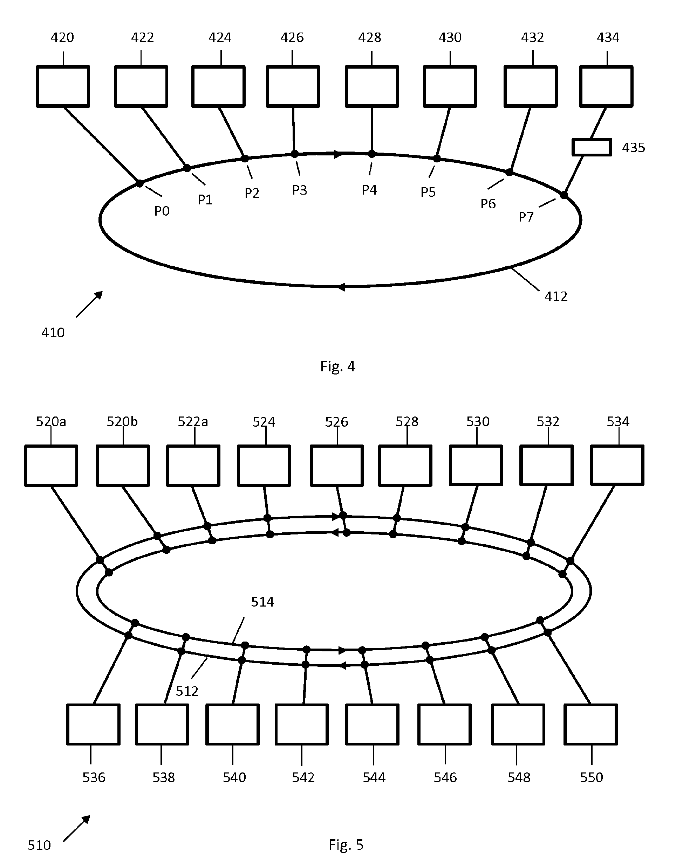

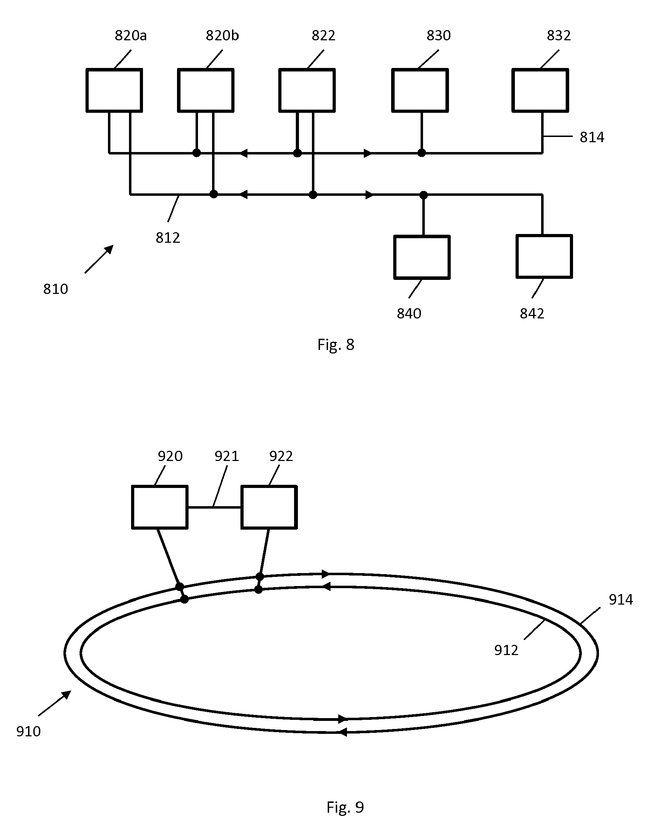

The ring busses 212, 214 are set up as direct connections between the connected elements, operated in a time-shifted manner. For the system of Fig. 2, the elements 220-234 are connected to both busses 212, 214. There are, however, no direct connections between the busses. Similarly, the systems shown in Fig. 5 and Fig. 9 do not comprise any direct connections between the busses. In other embodiments of the invention, the busses can comprise direct connections.

Successively, the connected elements are allowed to write, i.e., the active status is passed from one element to the next and read or write operations can only be performed by the element that is active at a given point in time. In some embodiments, more than one subtask can be transported in one clock cycle. Also, more than one dataset can be attached to one subtask (SIMD). Depending on the number of bus rings, the number of connected elements and the starting position and direction of the pointer, it can happen that more than one ring addresses the same element at one point in time. For this case, a FIFO buffer can be provided that absorbs the additional instructions and data. In Fig. 2, the FIFO buffer 235 is shown only for the other miscellaneous element 234, but in a similar way FIFO buffers can be provided for all processing elements.

Figure 3a shows a schematic representation of a bus system 310 comprising two rings 312, 314. Each of the rings is provided by a multicore processor, e.g. a cell processor. The multicore processor comprising the bus system 312 contains the control element according to the invention. In this embodiment, the two rings 312, 314 are connected via a FIFO buffer 320. Hence, the multicore processors comprising the respective rings 312, 314 can communicate directly with each other. Alternatively the two rings 312, 314 are connected via a FPGA 320 and can communicate indirectly via this FPGA. The bus system 310 can be adapted to carry out the method according to the invention.

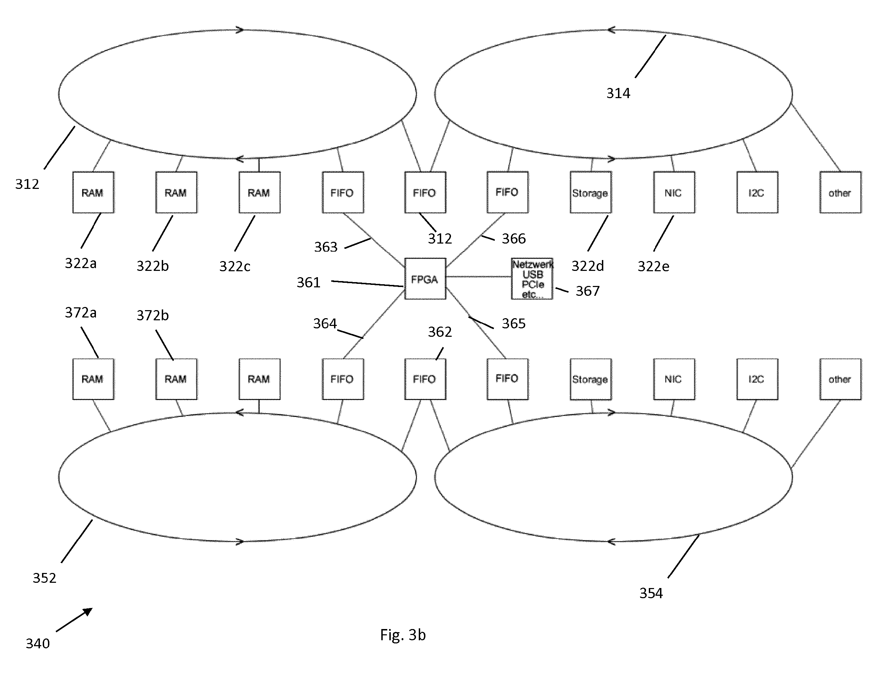

Figure 3b shows a schematic representation of a bus system 340 comprising four ring busses 312, 314, 352 and 354. Accordingly, the bus system 340 comprises the bus system 310, as shown in Fig. 3a. Each ring bus 312, 314, 352 and 354 constitutes a multicore processor, e.g. a cell processor. A plurality of different elements can be connected to the ring busses, as e.g. Inter-Integrated Circuits (I²C), Network interface controllers (NIC), Random-access memories (RAMs), Storages, buffers, as e.g. First In, First Out buffers (FIFO, etc.. The elements of the ring busses (e.g. the RAMs, storages, NICs I2C, etc.) are only examples, hence there can also be more, less or different elements connected to the ring busses and/or comprised by the multicore processors.

The bus system 340 comprises two sets, each comprising two multicore processors, i.e. the set of processors 312, 314 (as also shown in Fig. 3a) and the set of processors 352, 354. The processors of one set are directly communicating with each other, as explained above, over respective FIFO buffers 312 and 362. The sets are connected to each other by (and preferably communicating via) a FPGA 361. In order to do so, each processor is connected by a respective XIO link 363, 364, 365 and 366 to the FPGA 361. However, the each link 363, 364, 365 and 366 may also comprise a plurality of XIO links, preferably in parallel. The interface between each of the processors and the respective XIO link 363, 364, 365 and 366 is provided by FIFO buffers of the processors.

One of the processors, e.g. the processor 312 can comprise the control element according to the invention. The two sets together, i.e. the four processors 312, 314, 362, 364, can be adapted to carry out the method according to invention. In other words, when carrying out the method according to the invention, each processing element (i.e. processor core) comprised by the four processors 312, 314, 362, 364 can be used in parallel.

However, the bus system 340 preferably comprises still a third set (not shown), wherein the third set corresponds to the first and second set shown in Fig. 3b and explained above. Accordingly, the three sets together, i.e. the six processors comprised by the three sets, can be adapted to carry out the method according to invention. Of course, in the same way also four, five, six or even more sets can be connected together, wherein also each set can comprise more than two processors, in order to carry out together the method according to the invention.

The FPGA 361 additionally comprises at least one transceiver and/or General Purpose Input/Output (GPIO) which can provide a network interface 367. The interface 367 can be a small form-factor pluggable (SFP) or an enhanced small form-factor pluggable (SFP+), e.g. a Quad Small Form-factor Pluggable (QSFP or QSFP+), or a plurality of unkeyed 8P8C modular connectors (e.g. RJ45). The interface 367 might also comprise a combination of enhanced small form-factor pluggable (SFP+) and unkeyed 8P8C modular connectors (e.g. RJ45). Alternatively the FPGA can also be connected to at least one further FPGA (not shown) which comprises the network interface as described above.+

Figure 4 shows a schematic representation of a ring bus 412, wherein the pointer to the current active element is indicated as P0 and pointers to the next active elements are indicated as P1 to P7. In this embodiment, a processing core 420, which acts as a control element, a RAM 422, a Flash 424, a storage 426, an NIC 428, an I2C bus 430, a PCIe 432 and other elements 434 are connected to the ring bus 412, wherein the other elements 434 are connected to the ring bus 412 via a FIFO buffer 435. The ring bus 412 is configured to transport data in a clock-wise direction and also the pointer passes through the ring in a clockwise direction. In the shown example, the elements are separated by the distance of one clock cycle. Other embodiments may provide that the pointer position passes through the ring with different time increments which may or may not be equal in length. The forwarding of the pointer can be decided e.g. based on static priorities that are assigned to the different elements.

Figure 5 shows a schematic representation of a further bus system 510 in accordance with the present invention.

The operation of the invention shall be illustrated with the following example: Assuming that primary processing element 520a acts as a control element and sends a subtask that can be processed on one of the secondary processing elements 536-550: According to a prior art processing method, based on a previous successful result stored in one of the lookup tables, the subtask would be sent to secondary processing element 540 using first ring 512, which requires 14 clock cycles. After processing in the secondary processing element 540, which requires 4 clock cycles, the output data would be returned to primary processing element 520a on the first ring 512, which takes another 3 clock cycles. It takes a further 13 clock cycles before the active slot is returned to the primary processing element 520a. This yields a total cycle time of 14 + 4 + 13 + 3 = 34 clock cycles. According to the present invention, ideally it would be determined that the predicted cycle time is only 3 + 4 + 0 + 3 = 10 clock cycles if the subtask is sent to the secondary processing element 540 via the second ring 514, and returned to the primary processing element 520a via the first ring 512 without any bus waiting time because by set-up the ring 514 may have an exact matching offset to ring 512. In this example, the method according to the present invention leads to a reduction of the cycle time to less than a third of the cycle time according to the prior art approach.

The n connected elements correspond to n different pointer positions.

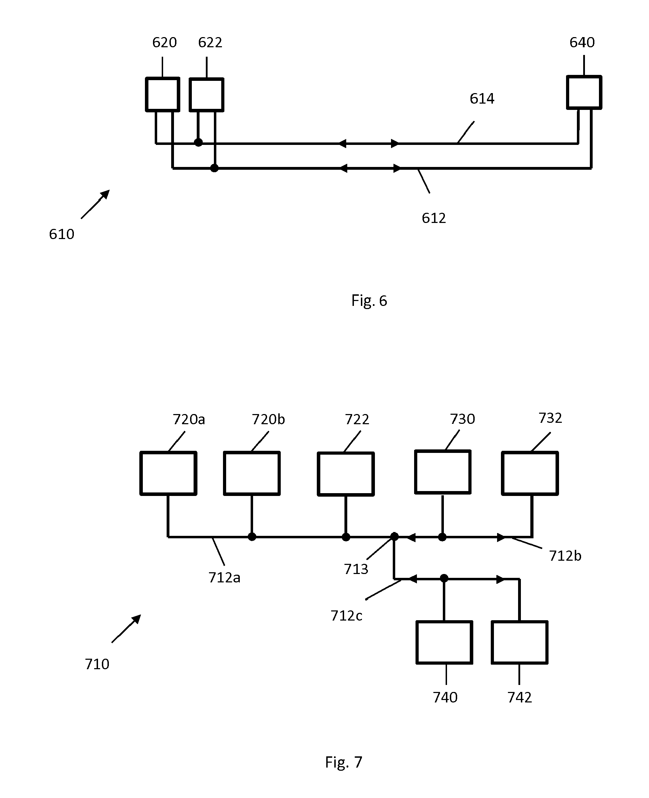

Figure 6 shows a schematic representation of a further bus system 610 in accordance with the present invention. The bus system 610 is set-up with two bi-directional busses 612, 614 with a linear topology and a time division multiple access scheme. Fig. 6 shows three elements 620, 622, 640 that are connected to both linear busses 612, 614. In general, there can be a number of n such elements connected to both busses. Several of these elements can act as control elements, with the other elements acting as processing elements, controlled by the control elements. In addition to the control and processing elements other elements e.g. a RAM controller could be connected to the busses 612, 614, too.

Alternatively, the bus system 610 can also be set up using a token passing scheme where the token is passed from one station to the next, wherein the "next" station is defined based on the addresses of the bus interfaces of the elements connected to the bus.

In a further embodiment of the invention, the pointer can be pushed or pulled by a connected control element to receive or send data to or from any other connected element.

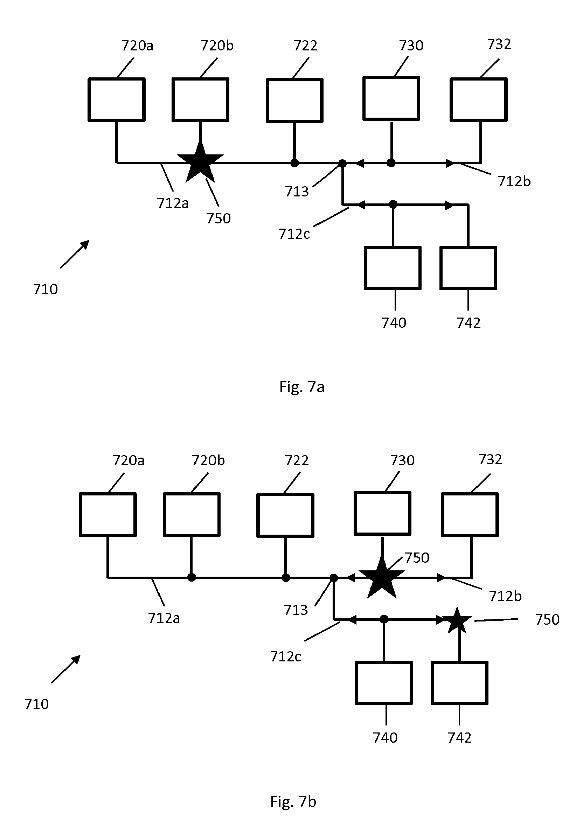

Figure 7 shows a schematic representation of a non-exclusive bus system 710 that comprises three linear parts 712a, 712b, 712c that are connected through a branch 713. Connected to the bus system 710 are: two control elements 720a, 720b and a RAM 722 that are connected to the first linear part 712a, two processing elements 730, 732 that are connected to the second linear part 712b and two processing elements 740, 742 that are connected to the third linear part 712c of the bus system 710. In addition to second and third linear part 712b, 712c shown in Fig. 7, there can be any number of additional linear parts which are also connected to the first linear part 712a. These additional linear parts can comprise the same number of connected elements.

For example the RAM component 722 has a total of three physical neighbours: control element 720b, processing element 730 of the second part 712b and processing element 740 of the third part 712c. Therefore, access to this bus system 710 should be managed with a token passing scheme where the neighbour relations are defined based on the addresses of the connected elements. It should be noted that linear parts 712b and 712c can be active at the same time. Temporary or second-level tokens are used to assign the active slot within one linear part. Knowledge about the current state and the predicted future availability of the linear parts can be used by the cycle prediction method and by the decision which processing elements the subtasks are assigned to.

In a preferred embodiment, to allow for the use of more than one token per bus 712a,b,c there is a primary branch part and a plurality of secondary branch parts. This is illustrated in Figs. 7a and 7b, where the first linear part 712a forms a primary branch and second and third linear part 712b ,712c form a secondary branch part.

To avoid conflicts there can only be one global token 750 which always has traversing priorities. The global token 750 is indicated in Figs. 7a and 7b as a big star, the local token 752 as a small star. If the global token 750 is present on the primary branch part, as shown in Fig. 7a, there cannot be any local tokens on any of the secondary branch parts. However if the global token 750 is present on one of the secondary branch parts, as shown in Fig. 7b, it is possible to allow for local tokens 752 in all or some of the other secondary branch parts which cannot leave their individual secondary branch parts.

Figure 8 shows a schematic representation of a non-exclusive bus system 810 comprising two bi-directional busses 812, 814. A first control element 820a, a second control element 820b and a RAM 822 are connected to both the first bus 812 and the second bus 814. A number of n processing elements 830, 832 are connected only to the second bus 814 and a number of n processing elements 840, 842 are connected only to the first bus 812. This set-up can be repeated n times such that there is a total of m*n processing elements connected to the bus system. The set-up shown in Fig. 8 has the advantage that for example the communication between the control elements 820a, 820b and RAM 822 can occur both through the first bus 812 and the second bus 814. This enables a total bandwidth that is twice as high compared to the bandwidth for communicating with the processing elements 830, 832, 840, 842, which may be accessed less often than the RAM. In this way, the architecture is adapted to the typical load scenarios. Another benefit is that communication with more than one SPE can occur simultaneously.

Access to the busses 812, 814 can be implemented with a simple time division multiple access scheme. Alternatively, for example a token passing scheme or a combination of the two can be used.

With regard to the embodiments explained above, it has to be noted that said embodiments may be combined with each other. Furthermore, it is understood, that the bus systems shown in the drawings can comprise further elements and further busses that are not shown in the drawings. In particular, branches as shown in Fig. 7 could also connect ring busses with linear parts. Furthermore, different busses that are connected via a bridge or share at least one element could use different access schemes.

Figure 9 shows a schematic representation of a non-exclusive bus system 910 comprising ring busses 912, 214 with a processing core 920 and a RAM 922 connected to them. Furthermore, the processing core 920 and the RAM 922 are connected through a direct connection 921. Further elements can be connected to the ring busses 912, 914, but are not shown in Fig. 9.

It should be noted that in other embodiments of the invention, the ring busses shown in Figures 1 and 9 can also be implemented with access protocols where the active time slot is passed from a first element to the next element when the first element is finished with accessing the bus. This can be implement e.g. as a token ring access scheme, where an element passes the token to the next element when it has finished accessing the bus.

## Claims

1. Method for optimizing machine code to be executed on a device that comprises one or more busses (212, 214, 312, 314, 412, 512, 514, 612, 614, 712a, 712b, 712c, 812, 814) and a plurality of processing elements (122-134, 222, 322-334, 422-434, 522-550, 620-640, 720a-742, 822-842), wherein the machine code is configured to execute a task on the device comprising a plurality of subtasks,
wherein the method comprises the steps:
- identifying for at least one subtask one or more processing elements (122-142, 222, 322-334, 422-434, 522-550, 620-640, 720a-742, 822-842) from the plurality of processing elements that are capable of processing the subtask,
- identifying one or more paths for communicating with the one or more identified processing elements (122-142, 222, 322-334, 422-434, 522-550, 620-640, 720a-742, 822-842),
- predicting a cycle length for one or more of the identified processing elements (122-142, 222, 322-334, 422-434, 522-550, 620-640, 720a-742, 822-842) and/or the identified paths,
- selecting a preferred processing element from the identified processing elements (122-142, 222, 322-334, 422-434, 522-550, 620-640, 720a-742, 822-842) and/or selecting a preferred path from the identified paths, and
- generating the machine code sequence that comprises instructions that cause the device to communicate with the preferred processing element over the preferred path and/or to execute the subtask on the preferred processing element.

2. The method of claim 1, wherein the step of identifying one or more processing elements (122-142, 222, 322-334, 422-434, 522-550, 620-640, 720a-742, 822-842) includes:
- dividing the task into subtasks,
- identifying logical dependencies of the subtasks, and
- identifying one or more processing elements (122-142, 222, 322-334, 422-434, 522-550, 620-640, 720a-742, 822-842) from the plurality of processing elements that are capable of processing the subtasks based on the dependencies.

3. The method of claim 2, wherein for independent subtasks a corresponding number of processing elements are identified, which are capable of processing said subtasks in parallel.

4. The method of claims 2 or 3, wherein subtasks having conditional relationships to each other are converted into parallel sub-tasks constituting single parallel cases to each other.

5. The method of one of the previous claims, wherein the cycle length for an identified processing element and/or an identified path is predicted based on
- a branch prediction method, in particular based on former predictions and/or selections of preferred paths,
- a brute force method, wherein the cycle length for each identified path is evaluated.

6. The method of one of the previous claims, wherein selecting the preferred processing element and/or selecting the preferred path is based on
- the priority of the task, wherein for small subtasks processing elements (122-142, 222, 322-334, 422-434, 522-550, 620-640, 720a-742, 822-842) and/or paths with a short cycle length are selected,
- the dependency of a subtask, wherein processing elements (122-142, 222, 322-334, 422-434, 522-550, 620-640, 720a-742, 822-842) and/or paths are selected such that independent or semi-independent subtasks can be carried out in parallel on several processing elements.

7. The method of one of the previous claims, wherein after the step of generating the machine code and/or during executing the machine code, the method comprises the further steps:
- identifying for at least one other subtask comprised by the task one or more processing elements (122-142, 222, 322-334, 422-434, 522-550, 620-640, 720a-742, 822-842) from the plurality of processing elements that are capable of processing the subtask,
- identifying one or more paths for communicating with the one or more identified processing elements (122-142, 222, 322-334, 422-434, 522-550, 620-640, 720a-742, 822-842),
- predicting a cycle length for one or more of the identified processing elements (122-142, 222, 322-334, 422-434, 522-550, 620-640, 720a-742, 822-842) and/or the identified paths, and
- selecting a preferred processing element from the identified processing elements (122-142, 222, 322-334, 422-434, 522-550, 620-640, 720a-742, 822-842) and/or selecting a preferred path from the identified paths.

8. The method of one of the previous claims, wherein the cycle length for an identified processing element (122-142, 222, 322-334, 422-434, 522-550, 620-640, 720a-742, 822-842) and/or an identified path is predicted based on
- a predicted forward transfer time for transferring an instruction and input data to the identified processing element (122-142, 222, 322-334, 422-434, 522-550, 620-640, 720a-742, 822-842) on the identified path,
- a predicted return transfer time for transferring output data from the identified processing element (122-142, 222, 322-334, 422-434, 522-550, 620-640, 720a-742, 822-842) on the identified path, and/or
- a predicted processing time for processing a subtask on the identified processing element (122-142, 222, 322-334, 422-434, 522-550, 620-640, 720a-742, 822-842).

9. The method of claim 8, wherein the predicted cycle length is the sum of the predicted forward transfer time, the predicted return transfer time and the predicted processing time.

10. The method of one of the previous claims, wherein predicting the cycle length is based on at least one of
- the current availability and/or utilization of the one or more busses (212, 214, 312, 314, 412, 512, 514, 612, 614, 712a, 712b, 712c, 812, 814), and
- the current availability and/or utilization of the one or more identified processing elements (122-142, 222, 322-334, 422-434, 522-550, 620-640, 720a-742, 822-842).

11. The method of one of the previous claims, wherein the method further comprises:
- beginning processing of a subtask on the selected processing element (122-142, 222, 322-334, 422-434, 522-550, 620-640, 720a-742, 822-842),
- updating the predicted cycle length of the subtask to obtain a predicted remaining cycle length of the subtask,
- cancelling the processing of the subtask on the selected processing element (122-142, 222, 322-334, 422-434, 522-550, 620-640, 720a-742, 822-842) if it is determined that the predicted remaining cycle length is higher than a predicted cycle length for processing the subtask in a different processing element (122-142, 222, 322-334, 422-434, 522-550, 620-640, 720a-742, 822-842), and
- assigning the subtask to said different processing element (122-142, 222, 322-334, 422-434, 522-550, 620-640, 720a-742, 822-842).

12. The method of one of the previous claims, wherein the method further comprises:
- determining a threshold time for the processing of a subtask,
- beginning processing of the subtask on the selected processing element (122-142, 222, 322-334, 422-434, 522-550, 620-640, 720a-742, 822-842),
- checking whether the actual processing time for the subtask is higher than the threshold time,
- cancelling the processing of the subtask if the actual processing time is higher than the threshold time,
- assigning the subtask to a different processing element (122-142, 222, 322-334, 422-434, 522-550, 620-640, 720a-742, 822-842).

13. A device, comprising:
- one or more busses (212, 214, 312, 314, 412, 512, 514, 612, 614, 712a, 712b, 712c, 812, 814),
- one or more control elements (120, 220, 320, 420, 520a, 520b, 620, 720a, 720b), and
- a plurality of processing elements (122-142, 222, 322-334, 372, 422-434, 522-550, 620-640, 720a-742, 822-842),
wherein at least one of the control elements (120, 220, 320, 420, 520a, 520b, 620, 720a, 720b) is adapted to generate a machine code configured to execute a task on the plurality of processing elements (122-142, 222, 322-334, 422-434, 522-550, 620-640, 720a-742, 822-842) in parallel, wherein the device further comprises:
- a first multicore processor comprising one or more first processing elements (322a, 322b, 322c) and at least one control element,
- at least one second multicore processor comprising one or more second processing elements (322d, 322e), wherein the first and second multicore processors are located on a first board and being connected to each other by a point to point cable or a board to board connection, and
- at least one third multicore processor comprising one or more third processing elements (372a, 372b) being connected to the first multicore processor via a Field Programmable Gate Array (FPGA) (361).

14. The device of claim 13, wherein the device further comprises one or more fourth processing elements being connected to the Field Programmable Gate Array (FPGA) via a network

15. The device of one of claims 13 or 14, wherein the Field Programmable Gate Array (FPGA) (361) is configured to realize a communication between the at least one third multicore processor and the first multicore processor.

16. The device of one of claims 13 to 15, wherein each of the first, second and third multicore processors is connected to the Field Programmable Gate Array (FPGA) (361) via at least one respective XIO link (363, 364, 365, 366).

17. The device of one of claims 13 to 16, wherein the multicore processors comprise each a ring bus (312, 314, 352, 354).

18. The device of one of claims 13 to 17, wherein the task comprises a plurality of subtasks, and wherein generating the machine code is based on:
- identifying for at least one subtask one or more processing elements (122-142, 222, 322-334, 422-434, 522-550, 620-640, 720a-742, 822-842) from the plurality of processing elements that are capable of processing the subtask,
- identifying one or more paths for communicating with the one or more identified processing elements (122-142, 222, 322-334, 422-434, 522-550, 620-640, 720a-742, 822-842),
- predicting a cycle length for one or more of the identified processing elements (122-142, 222, 322-334, 422-434, 522-550, 620-640, 720a-742, 822-842) and/or the identified paths,
- selecting a preferred processing element from the identified processing elements (122-142, 222, 322-334, 422-434, 522-550, 620-640, 720a-742, 822-842) and/or selecting a preferred path from the identified paths, and
- generating the machine code sequence that comprises instructions that cause the device to communicate with the preferred processing element over the preferred path and/or to execute the subtask on the preferred processing element.

19. The device of one of claims 13 to 18, wherein at least one of the control elements (120, 220, 320, 420, 520a, 520b, 620, 720a, 720b) is adapted to predict the cycle length based on
- a predicted forward transfer time for transferring an instruction and input data to the processing element (122-142, 222, 322-334, 422-434, 522-550, 620-640, 720a-742, 822-842),
- a predicted return transfer time for transferring output data from the processing element (122-142, 222, 322-334, 422-434, 522-550, 620-640, 720a-742, 822-842), and/or
- a predicted processing time for processing the subtask in a processing element (122-142, 222, 322-334, 422-434, 522-550, 620-640, 720a-742, 822-842).

20. The device of one of claims 13 to 19, wherein at least one of the control elements (120, 220, 320, 420, 520a, 520b, 620, 720a, 720b) is adapted to carry out the steps:
- beginning execution of the subtask on the selected processing element (122-142, 222, 322-334, 422-434, 522-550, 620-640, 720a-742, 822-842),
- updating the predicted cycle length of the subtask to obtain a predicted remaining cycle length of the subtask,
- cancelling the processing of the subtask on the selected processing element (122-142, 222, 322-334, 422-434, 522-550, 620-640, 720a-742, 822-842) if it is determined that the predicted remaining cycle length is higher than a predicted cycle length for processing the subtask in a different processing element (122-142, 222, 322-334, 422-434, 522-550, 620-640, 720a-742, 822-842), and
- re-assigning the subtask to said different processing element (122-142, 222, 322-334, 422-434, 522-550, 620-640, 720a-742, 822-842).

21. The device of one of claims 13 to 20, wherein it further comprises one or more busy tables comprising information about the capabilities and/or current availability and/or utilization of the plurality of processing elements (122-142, 222, 322-334, 422-434, 522-550, 620-640, 720a-742, 822-842), wherein at least one of the control elements (120, 220, 320, 420, 520a, 520b, 620, 720a, 720b) is adapted to regularly update the information in the one or more busy tables.

22. The device of one of claims 13 to 21, further comprising a prediction module that is configured to predict future subtasks based on previously processed subtasks.

23. The device of claim 22, wherein the device is adapted to cancel one or more predicted future subtasks in favour of executing current subtasks if one or more new subtasks arrive after beginning execution of one or more predicted future subtasks.

24. The device of one of claims 13 to 23, wherein the one or more busses (212, 214, 312, 314, 412, 512, 514, 612, 614, 712a, 712b, 712c, 812, 814), the one or more control elements (120, 220, 320, 420, 520a, 520b, 620, 720a, 720b), and at least some of the plurality of processing elements (122-142, 222, 322-334, 422-434, 522-550, 620-640, 720a-742, 822-842) are located inside the same chip housing.

25. Server system, comprising a device according to one of claims 13 and 24.
